# EUROPEAN PATENT APPLICATION

(11) **EP 1 179 761 A1**
(43) Date of publication of application: **13.02.2002**
(21) Application number: 01119027.9
(22) Date of filing: 07.08.2001
(51) Int. Cl.: G05G 1/14, B60T 7/06

(54) **A pedal-control device with adjustable position particularly for motor vehicles**

(30) Priority: 08.08.2000 IT TO000788
(71) Applicant: BITRON S.p.A., 10042 Nichelino (Torino) (IT)
(72) Inventor: Promutico, Fabrizio, 03010 Alatri (Frosinone) (IT)
(74) Representative: Quinterno, Giuseppe

(57) **Abstract**

The device comprises:
a stationary support structure (2),
a pedal (4) pivotable about an axis (O-O) relative to the structure,
an operating lever (6) to which a control member (11) is connected and which is mounted for pivoting relative to the structure (2) and can be pivoted by the pedal (4) when the latter is pressed, and
adjustment devices (3g, 3, 5) for acting on the pedal (4) in order selectively to modify its operative position relative to the axis (O-O).

A rack (5) is fixed to the pedal (4) and meshes with a pinion (3g) coaxial with the axis (O-O), and restraining elements (7, 9, 10) are associated with the lever (6) and tend to hold the pedal (4) in a predetermined position relative to the axis (O-O). The arrangement is such that the pinion (3g) is normally fixed and can act as a support for the pivoting of the rack (5) and the pedal (4), and the pinion (3g) can be rotated so as to bring about a translational movement of the rack (5) and of the pedal (4) in order to adjust the operative position of the pedal.

## Description

The present invention relates to a pedal-control device with adjustable position, particularly for motor vehicles.

More specifically, the subject of the invention is a pedal-control device comprising:
an operatively stationary support structure,
a pedal member mounted for pivoting about an axis relative to the structure,
an operating lever to which a movable control member is connected and which is mounted for pivoting relative to the structure and can be pivoted by the pedal member when the latter is pressed, and
adjustment means for acting on the pedal member in order selectively to modify its operative position relative to the axis.

Pedal-control devices with adjustable position of this type are described, for example, in European patent applications EP-A-0 256 466 and EP-A-0 410 815.

The devices described in these documents resort to the use of solutions of the type with screw and nut screw for adjusting the operative position of the pedal and are quite complex, bulky and expensive.

An object of the present invention is therefore to provide a novel pedal-control device with adjustable position which can be produced easily and inexpensively and is more compact.

This and other objects are achieved, according to the invention, by a pedal-control device of the type specified above, characterized in that a rack is fixed to the pedal member and meshes with a pinion coaxial with the pivot axis, and in that restraining means, cooperating with the pedal member, are associated with the operating lever and tend to hold the pedal member in a predetermined angular position of rest relative to the axis, the arrangement being such that the pinion is normally fixed and acts as a pivot axis for the rack and the pedal, and the pinion can be rotated so as to bring about a translational movement of the rack and of the pedal in order to adjust the position of the pedal.

Further characteristics and advantages of the invention will become clear from the following detailed description, given purely by way of non-limiting example, with reference to the appended drawings, in which:
Figure 1 is a perspective view of a device according to the invention,
Figure 2 is a side view of the device shown in Figure 1,
Figures 3 and 4 are views sectioned on the lines III-III and IV-VI of Figure 2, respectively,
Figure 5 is an exploded perspective view of the device of the preceding drawings,
Figure 6 is a partially-sectioned, partial perspective view of the device of the preceding drawings,
Figure 7 is a section taken on the line VII-VII of Figure 4, and
Figure 8 is a section taken on the line VIII-VIII of Figure 7.

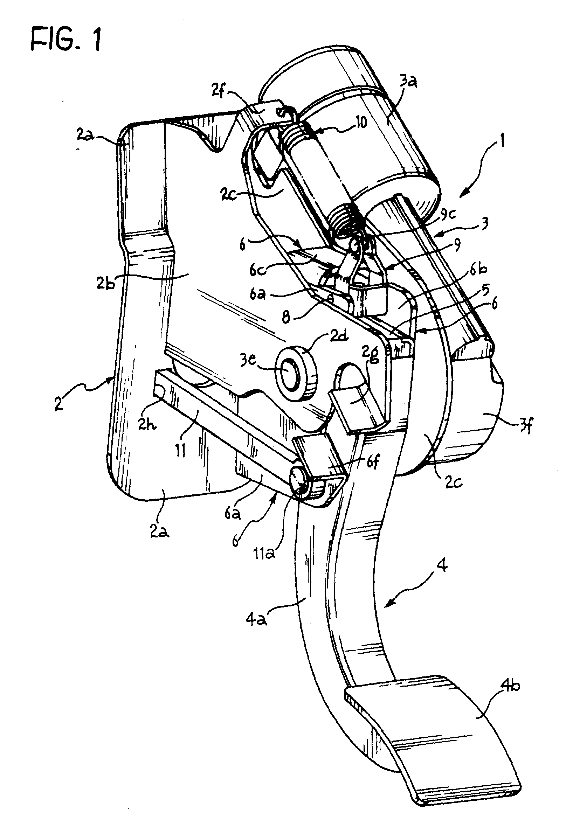

In Figure 1, a pedal-control device according to the invention is generally indicated 1. The device can be used, for example, in a motor vehicle, and comprises an operatively stationary support structure 2 to be fixed, for example, to the fireproof bulkhead of a motor-vehicle passenger compartment.

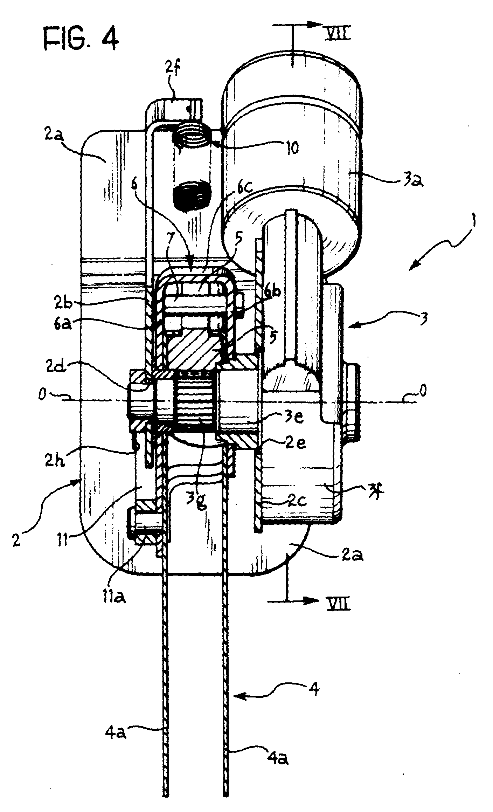

The support structure 2 comprises a shaped plate 2a from which two substantially parallel flanges 2b, 2c extend. The flanges have respective circular openings 2d, 2e aligned with one another along an axis indicated O-O in Figure 4.

The flange 2b of the support structure 2 has an upper bent appendage 2f in the vicinity of the plate 2a. The same flange 2b has, in its distal region, a further appendage 2g bent horizontally away from the other flange 2c.

Moreover, an opening 2h is formed in the portion 2a of the support structure 2.

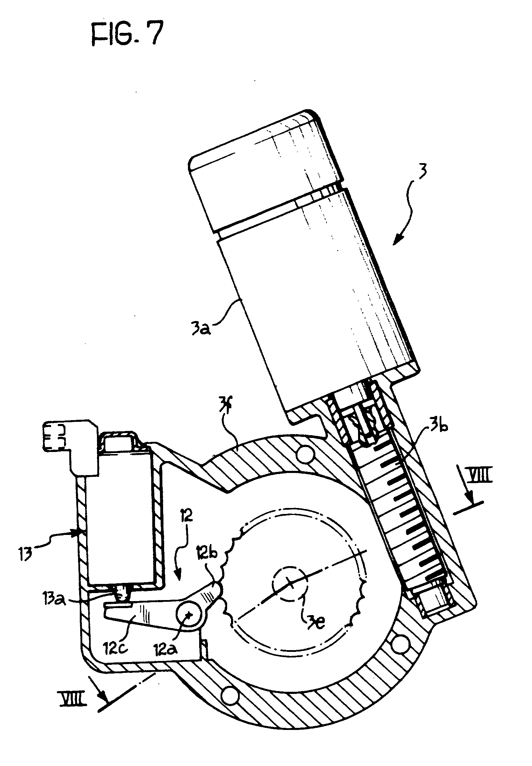

In the exemplifying embodiment shown in the drawings, an electric drive unit, generally indicated 3, is fixed to the support structure 2 in the vicinity of the outer side of the flange 2c. This unit comprises an electric motor 3a, for example, a direct-current motor, the shaft of which is connected to a worm screw 3b (Figures 7 and 8) which meshes with a gear 3c with helical teeth (Figure 8), rotatable about the axis O-O.

A second gear, indicated 3d in Figures 7 and 8, is fixed to and coaxial with the gear 3c.

The gears 3c and 3d are keyed to a shaft 3e which projects from a casing 3f that encloses the endless screw 3b and the gears.

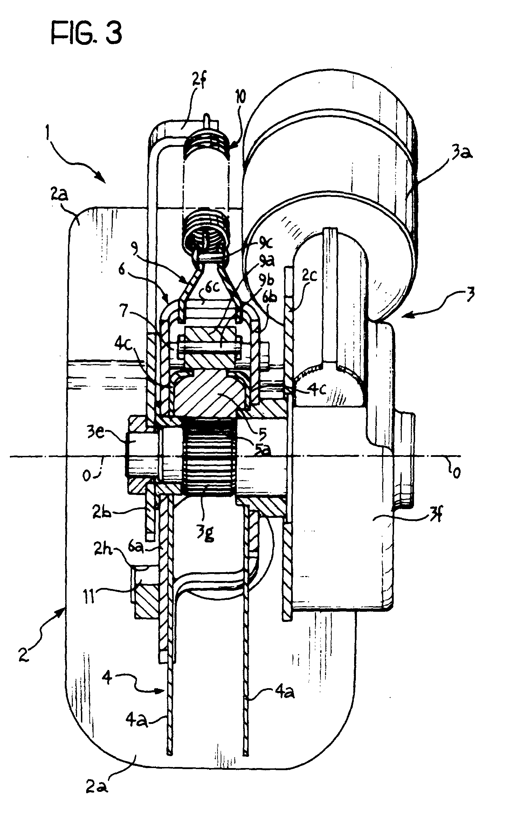

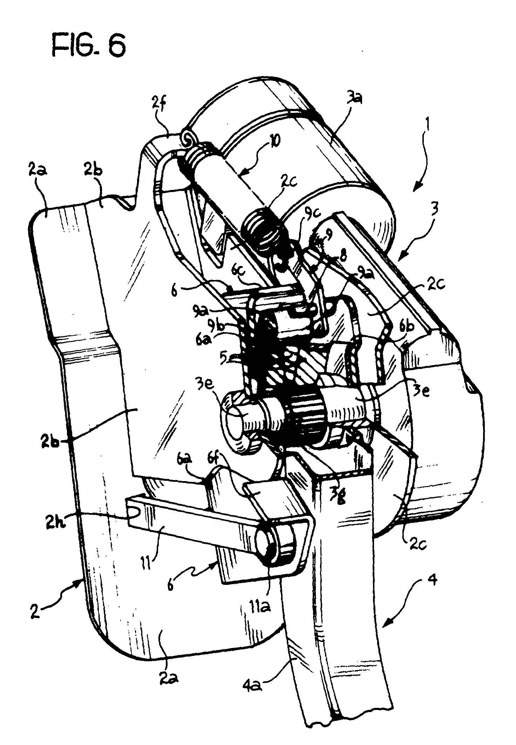

The shaft 3e is supported rotatably in the openings 2d and 2e of the support structure 2. In its intermediate portion, the shaft 3e has a sprocket or pinion 3g (Figures 3 to 6).

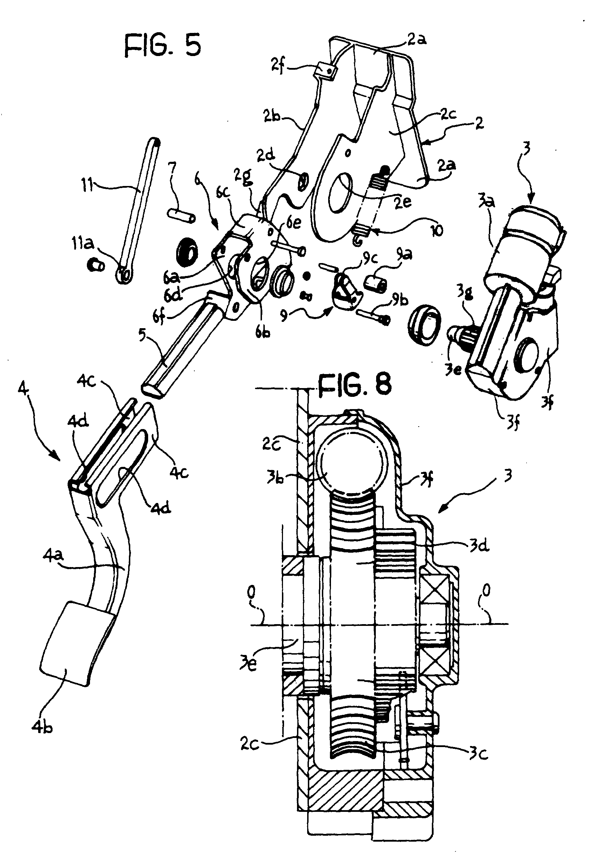

A pedal-control member is indicated 4 in the drawings. In the embodiment shown, this member 4 comprises a shaft 4a of substantially C-shaped cross-section, to one end of which is fixed a plate 4b on which the user's foot can bear. At the opposite end, the shaft 4a forms two elongate and parallel appendages, indicated 4c (see Figure 5 in particular) having respective elongate, slot-like openings 4d.

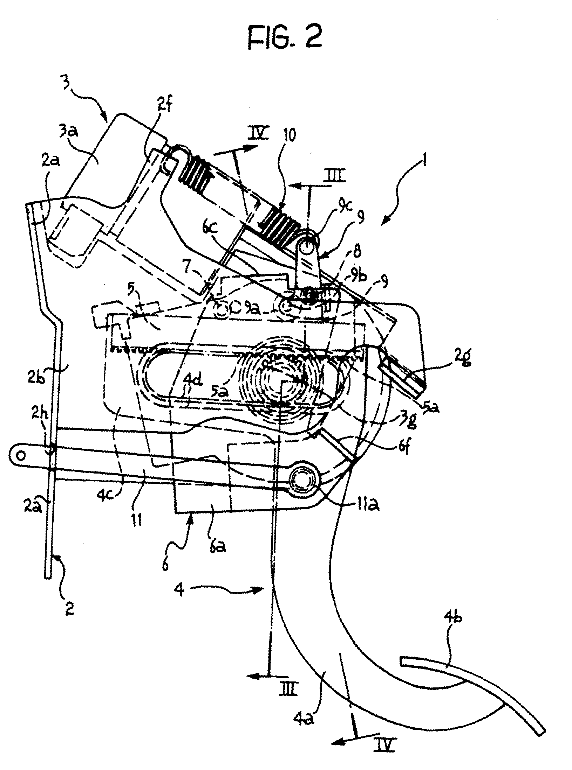

The upper edges of the appendages 4c of the pedal member 4 are bent towards one another and a rack 5 is fixed firmly between them, above the openings 4d, with its teeth 5a facing downwards (Figure 2).

The pedal member 4 is mounted between the two flanges or side walls 2b, 2c of the support structure 2 so that the rack 5 fixed to the pedal member 4 bears on and meshes with the teeth of the pinion 3g of the shaft 3e. The portions of this shaft adjacent the pinion 3g extend through the slot-like openings 4d of the pedal member.

A shaped operating lever, generally indicated 6 in the drawings, has two substantially flat lateral flanges or plates 6a and 6b interconnected at the top by a joining portion 6c.

This lever 6 is mounted pivotably between the flanges 2b, 2c of the support structure 2, astride the top portion of the pedal member 4 and of the associated rack 5 so as to be pivotable about the axis O-O, that is, about the shaft 3e. This shaft extends through two facing circular openings 6d, 6e formed in the two flanges or plates of the lever 6. A transverse pin 7, which is preferably rotatable, extends between the two flanges 6a, and 6b of the lever member 6 in the vicinity of the upper connecting portion 6c (Figures 2-5). As will become clearer from the following description, this pin bears operatively on the upper portion of the pedal member 4 and of the associated rack 5.

A rocker lever, generally indicated 9, is mounted for pivoting between the flanges 6a and 6b of the lever member 6, about a pin 8 (see Figures 1 and 2 in particular). This rocker lever carries, at one end, a roller 9a supported rotatably by a pin 9b. A helical spring 10 is connected to the other end 9c of the rocker lever 9. The opposite end of the spring 10 is engaged on the appendage 2f of the support structure 2. (As an alternative to its engagement on the appendage 2f, the spring 10 could be connected to an appendage of the lever 6. In this case, the pedal would have to be biased towards the rest position in another way). The arrangement is such that the spring 10 tends to pivot the rocker lever 9 anticlockwise as seen in Figure 2, so as to keep the roller 9a in engagement with the top of the pedal member 4 and of the associated rack 5.

The rocker lever 9 with the roller 9a and the associated spring 10 together form a device for taking up play, keeping the rack 5 permanently in engagement with the pinion 3g of the shaft 3e.

As can be seen, for example, in Figures 1, 2 and 6, the flange 6a of the lever member 6 has an appendage 6f bent horizontally away from the other flange 6b.

The appendage or tab 6f of the lever member 6 is intended to be brought into abutment with a spacer element, not shown, connected to the appendage or tab 2g of the support structure 2 when the pedal 4 is released and readopts its rest position shown, for example, in Figures 1 and 2.

A transmission or control member, indicated 11, is articulated to the operating lever 6 at 11a and extends through the plate-like portion 2a of the support structure 2 for connection, for example, to the piston of a brake master cylinder.

The above-described arrangement is such that, at rest, that is, when the pedal 4 is not acted on, as shown in Figures 1 and 2, the spring 10 holds the operating lever 6, by means of the rocker lever 9, in the position shown in which its tab 6f bears against the spacer element (not shown) connected to the tab 2g of the support structure 2, and the pin 7 bears on the top of the pedal 4 and of the associated rack 5. The roller 9a, which also bears on the top of the pedal and of the rack, helps to keep the rack 5 in engagement with the pinion 3g and to keep the rack oriented in a predetermined direction, for example, a horizontal direction.

The shaft 3e and the associated pinion 3g are normally fixed. The pinion 3g is therefore suitable for acting as a support for the pivoting of the rack 5 and of the pedal 4, when the pedal is pressed.

When the pedal member 4 is operated, it pivots about the axis O-O, together with the rack 5, as a result of the rolling of the rack over the periphery of the pinion 3g. By means of the pin 7, the pedal member 4 also brings about pivoting (clockwise as seen in Figure 2) of the operating lever 6 about the axis O-O of the shaft 3e, against the action of the spring 10, which is stretched. The pivoting of the operating lever 6 brings about a movement of the transmission or control member 11 in order to operate, for example, the brakes of a motor vehicle.

When the pedal 4 is released, the entire device 1 is returned to the condition shown in Figures 1 and 2, under the action of the spring 10.

The operative position of the pedal member 4 can be adjusted as a result of the rotation of the shaft 3e and of the associated pinion 3g. This rotation can advantageously be brought about by the activation of the electric motor 3a.

The rotation of the pinion 3g (for example, clockwise as seen in Figure 2) brings about a corresponding translational movement (towards the right) of the rack 5 and of the pedal 4. When the pinion 3g stops rotating, the pedal 4 is in a new operative position.

The locking of the shaft 3e and the associated pinion 3g may be achieved simply by the construction of the geared motor unit 3 in a manner such that the coupling between the gear 3c with helical teeth and the worm screw 3b is irreversible.

Alternatively, as shown in the drawings, the locking of the position of the shaft 3e may be achieved by means of a mechanism which will now be described with reference to Figures 7 and 8.

A locking rocker 12 associated with the gear 3d is mounted for pivoting at 12a and has a first arm 12b for engaging between two adjacent teeth of the gear 3d in order to prevent it rotating, and a second arm 12c cooperating with an electrically-operated actuator, generally indicated 13. This actuator is, for example, of the type comprising a solenoid which, when energized, can bring about the movement of a movable member 13a which, by interacting with the arm 12c of the rocker 12, releases the other arm 12b from the gear 12d, allowing the shaft 3e and the associated pinion 3g to rotate.

With the above-described solution, the adjustment of the operative position of the pedal 4 involves the release of the gear 3d by the excitation of the actuator 13 and then the activation of the electric motor 3a in order to bring about the translational movement of the rack 5 and of the pedal 4.

When the new desired operative position of the pedal has been reached, the electric motor 3a is deactivated and the actuator 13 is de-energized, so that the rocker 12 locks the shaft 3e again.

In a manner not shown, the electric motor 3a may be energized as a result of the excitation of the actuator 13, as occurs for electric starter motors of motor vehicles.

An electric angular position transducer or sensor may advantageously but not necessarily be associated with the shaft 3e or with a member fixed for rotation therewith, for providing electrical signals from which the axial position of the rack 5 and of the associated pedal 4 can be inferred.

If, in the assembled condition, the rack 5 is arranged substantially horizontally, the rotation of the pinion 3g brings about a translational movement thereof, also in a substantially horizontal direction. The change in the operative position of the pedal 4 is consequently a change exclusively in a horizontal direction.

It is, however, possible to arrange the device 1 as a whole in a manner such that the rack 5 is oriented along a direction forming an angle with respect to the horizontal. In this case, the translational movement of the rack 5 leads to both a horizontal and a vertical change in the operative position of the pedal 4.

A combined horizontal and vertical change in the operative position of the pedal 4 may, however, be achieved by shaping the top portion of the pedal member 4 and/or of the rack 5 in a non-linear manner so that the top portion cooperates with the pin 7 and the pressure roller 9a substantially in the manner of a cam.

Although in the embodiment shown by way of example, the electric motor 3a used for bringing about the rotation of the shaft 3 of the associated pinion 3g is mounted directly on the support structure 2, this motor may be positioned elsewhere and coupled to the shaft 3e by means of known kinematic mechanisms, for example, with the use of a flexible transmission shaft.

It is also possible, although probably not of practical advantage, to provide for the adjustment of the operative position of the pedal by manual rotation of the shaft 3e and of the pinion 3g with the help of a tool, avoiding the use of a motor-driven rotation actuator.

If an electric rotation actuator is used, it need not necessarily be mounted in a fixed manner relative to the support structure.

Moreover, the above-described device enables the operative position of a further, adjacent pedal also to be adjusted, by means of an extension of the shaft 3e and a duplication of the components.

In general, the adjustment of the pedal position can be achieved by a rotation of the shaft 3e through less than one turn. This advantageously enables the angular transducer, if used, to be a low-cost transducer with absolute measurement.

Naturally, the principle of the invention remaining the same, the forms of embodiment and details of construction may be varied widely with respect to those described and illustrated purely by way of non-limiting example, without thereby departing from the scope of the invention as defined in the appended claims.

## Claims

1. A pedal-control device with adjustable position, comprising:
an operatively stationary support structure (2),
a pedal member (4) mounted for pivoting about an axis (O-O) relative to the structure,
an operating lever (6) to which a movable control member (11) is connected and which is mounted for pivoting relative to the structure (2) and can be pivoted by the pedal member (4) when the latter is pressed, and
adjustment means (3g, 3, 5) for acting on the pedal member (4) in order selectively to modify its operative position relative to the axis (O-O),
the device being **characterized in that** a rack (5) is fixed to the pedal member (4) and meshes with a pinion (3g) coaxial with the axis (O-O), and **in that** restraining means (7, 9, 10) are associated with the operating lever (6) and tend to hold the pedal member (4) in a predetermined angular position relative to the axis (O-O), the arrangement being such that the pinion (3g) is normally fixed and can act as a support for the pivoting of the rack (5) and the pedal (4), and the pinion (3g) can be rotated so as to bring about a translational movement of the rack (5) and of the pedal (4) in order to adjust the operative position of the pedal.

2. A device according to Claim 1 in which the operating lever (6) is mounted for pivoting about the same pivot axis (O-O) as the pedal (4) and the pinion (3g).

3. A device according to Claim 1 or Claim 2 in which the restraining means include an auxiliary lever (9) articulated pivotably to the operating lever (6) and acted on by resilient means (10) in a manner such that it tends to keep the rack (5) meshed with the pinion (3g).

4. A device according to Claim 3 in which the auxiliary lever (9) is a rocker lever with a first arm which carries a rotatable pressure roller (9a) that bears on the pedal/rack unit (4, 5) and with a second arm (9c) which is connected to the resilient means (10).

5. A device according to Claim 3 or Claim 4 in which the resilient means (10) is anchored to the support structure (2) and can bias the pedal (4) towards a predetermined rest position.

6. A device according to any one of Claims 3 and subsequent claims in which the restraining means further comprise a coupling element (7) of the operating lever (6), the coupling element (7) bearing on the pedal/rack unit (4, 5).

7. A device according to any one of the preceding claims in which the pinion (3g) is fixed for rotation with a shaft (3e) connected to an electrically-operated rotation actuator (3).

8. A device according to Claim 7 in which the rotation actuator (3) is fixed to the support structure (2).

9. A device according to Claim 7 or Claim 8 in which the rotation actuator (3) comprises an electric motor (3a) connected to a reducer (3b, 3c) including a worm screw (3b) coupled with a gear (3c) with helical teeth connected to the shaft (3e).

10. A device according to any one of Claims 7 to 9 in which the electrical rotation actuator (3) is irreversible.

11. A device according to any one of Claims 7 to 9 in which the rotation actuator (3) is reversible and an electrically-operated locking/release device (3d, 12, 13) is associated therewith.

12. A device according to Claim 11 in which the locking/release device comprises a gear (3d) coupled with the shaft (3e) and an associated locking/release lever mechanism (12) the position of which can be controlled by means of an electric actuator (13).
The whole substantially as described and illustrated and for the purposes specified.
